# FASCICULE DE BREVET EUROPEEN

(11) **EP 4 284 685 B1**
(45) Date de publication et mention de la délivrance du brevet: **20.08.2025**
(21) Numéro de dépôt: 21819866.1
(22) Date de dépôt: 29.11.2021
(51) Int. Cl.: B60S 1/48, B08B 3/02

(54) **PROCÉDÉ DE VÉRIFICATION DU FONCTIONNEMENT D'UN DISPOSITIF DE NETTOYAGE DE SURFACE DE VÉHICULE**
VERFAHREN ZUR FUNKTIONSÜBERPRÜFUNG EINES FAHRZEUGOBERFLÄCHENREINIGUNGSGERÄTES
METHOD FOR CHECKING THE OPERATION OF A VEHICLE SURFACE CLEANING DEVICE

(30) Priorité: 26.01.2021 FR 2100703
(43) Date de publication de la demande: 06.12.2023
(73) Titulaire: VALEO SYSTEMES D'ESSUYAGE, 78322 Le Mesnil Saint Denis (FR)
(72) Inventeur: GRASSO, Giuseppe, 63500 ISSOIRE (FR)
(74) Mandataire: Valeo Visibility
(86) Numéro de dépôt international: PCT/EP2021/083399
(87) Numéro de publication internationale: WO 2022/161660

(56) Documents cités:
- FR-A1- 3 097 826
- FR-A5- 2 090 585
- US-A1- 2020 361 421

## Description

L'invention concerne les dispositifs de nettoyage d'une surface de véhicule automobile destinés à être embarqués sur un véhicule automobile.

De nombreuses surfaces, par exemple des capteurs d'assistance à la conduite de véhicules automobiles, peuvent faire l'objet de différents types de salissures. On peut par exemple citer les différentes caméras ou encore les capteurs de distance, les capteurs à ultrason, les radars, les lidars ou encore les capteurs de pluie placés sur le véhicule.

Or, ces salissures peuvent conduire à un dysfonctionnement de certains dispositifs d'aide à la conduite ou à l'apparition de difficultés pour un utilisateur du véhicule (manque de visibilité à cause de salissures sur le pare-brise). Il est donc nécessaire de prévoir au moins un dispositif de nettoyage de ces surfaces.

Classiquement, de tels dispositifs de nettoyage comprennent un réservoir dans lequel du liquide de nettoyage est stocké et d'un circuit de distribution fluidique composé de différentes canalisations ou tuyaux permettant d'acheminer le liquide de nettoyage vers au moins une buse de nettoyage placée devant une surface de manière à projeter du liquide de nettoyage sur cette dernière (il y a en règle générale plusieurs buses de nettoyage pour plusieurs surfaces).

Une pompe destinée à projeter du liquide de nettoyage dans le circuit de distribution fluidique jusqu'à la buse de nettoyage est généralement montée directement sur le réservoir. Plus précisément, un tube d'admission de liquide de la pompe est monté en force dans une ouverture ménagée dans le réservoir (un joint permet de garantir l'étanchéité de l'ensemble), l'orifice de sortie de liquide est quant à lui connecté au circuit de distribution fluidique.

Il est également connu de placer, sur le circuit de distribution fluidique, un bloc de distribution de liquide de nettoyage comprenant par exemple plusieurs vannes entre la pompe et la ou les buses de nettoyage, chaque vanne pouvant être reliée fluidiquement à une ou plusieurs buses de nettoyage. Ce bloc de vanne permet par exemple une ouverture sélective des vannes pour ne projeter du liquide de nettoyage qu'à travers les buses de nettoyage situées face à une surface devant être nettoyée et conserver les autres buses de nettoyage inactives. Il est également possible d'utiliser le bloc de distribution comme palier intermédiaire permettant une pressurisation maximale d'une partie du circuit de distribution fluidique située entre la pompe et le bloc de distribution afin de limiter les pertes de charge jusqu'aux buses de nettoyage.

Lorsque qu'un dysfonctionnement d'un capteur d'aide à la conduite dû à la présence de salissures est détecté (de manière automatique par exemple) ou lorsqu'un utilisateur active une commande de nettoyage, la pompe prélève du liquide de nettoyage dans le réservoir, le liquide étant à une pression similaire à la pression atmosphérique (la pression dépend de la hauteur de liquide de nettoyage dans le réservoir), et le propulse dans le circuit de distribution fluidique à une pression plus élevée (la différence de pression étant dépendante du dimensionnement de la pompe). Le liquide de nettoyage pressurisé passe par une ou des vannes en position ouverte et est projeté par la ou les buses de nettoyage sur un ou des capteurs (ou une autre surface à nettoyer).

Comme expliqué auparavant, le dispositif de nettoyage permet de garantir la propreté de capteurs pouvant être cruciaux pour un utilisateur du véhicule et donc d'assurer en partie leur bon fonctionnement. Il est donc nécessaire de pouvoir vérifier le bon fonctionnement du dispositif de nettoyage afin d'éviter que ce dernier ne soit constaté qu'après un défaut de fonctionnement d'un ou plusieurs capteurs. Ceci devient de plus en plus crucial pour les véhicules automobiles autonomes. En effet, cela pourrait permettre d'avertir un utilisateur du véhicule tout en faisant basculer, si possible, le fonctionnement du dispositif de nettoyage ou des capteurs en mode dégradé. Un défaut de fonctionnement peut par exemple provenir d'un défaut au niveau de la pompe (ne fonctionnant plus ou fonctionnant mal), des conduites (par exemple percées) ou encore du bloc de distribution de liquide (défaut total ou partiel d'ouverture ou de fermeture d'une ou plusieurs vannes). FR-A-2090585 montre un procédé similaire.

L'invention a notamment pour but de fournir un procédé de vérification du fonctionnement d'un dispositif de nettoyage de surface de véhicule afin de s'assurer du bon fonctionnement du dispositif de nettoyage et ainsi anticiper, le cas échéant, un défaut de fonctionnement de capteurs d'assistance à la conduite présents sur le véhicule automobile.

A cet effet l'invention a pour objet un procédé de vérification du fonctionnement d'un dispositif de nettoyage de surface de véhicule destiné à être monté sur un véhicule automobile, le dispositif de nettoyage comprenant un réservoir de liquide de nettoyage, au moins une buse pour projeter le liquide de nettoyage sur une surface à nettoyer, un circuit de distribution fluidique agencé pour acheminer du liquide de nettoyage du réservoir vers la buse de nettoyage et une pompe agencée pour injecter le liquide de nettoyage contenu dans le réservoir dans le circuit de distribution fluidique, le circuit de distribution fluidique comprenant un bloc de distribution de liquide de nettoyage comprenant au moins une vanne et disposé entre un orifice de sortie de la pompe et la buse, le procédé comprenant, au moins une fois, les étapes suivantes :
- commande d'activation de la pompe pour injecter du liquide de nettoyage jusqu'à la vanne durant une période de temps déterminée, la commande d'activation de la pompe pour injecter du liquide jusqu'à un orifice d'entrée de la vanne étant couplée au maintien d'un état fermé de la ou des vanne(s),
- au moins une mesure d'un paramètre relatif à la pression du liquide de nettoyage dans un segment du circuit de distribution fluidique localisé en amont de la ou des vanne(s) par au moins un capteur de pression,
- comparaison du paramètre relatif à la pression mesurée à une valeur attendue prédéterminée, et
- détermination d'un état de fonctionnement du dispositif de nettoyage en fonction du résultat de comparaison entre le paramètre relatif à la pression mesuré à la valeur attendue prédéterminée, et
- génération d'un signal d'alerte en cas de dysfonctionnement du dispositif de nettoyage, dans lequel la commande d'activation de la pompe pour injecter du liquide jusqu'à un orifice d'entrée de la vanne est suivie par une ouverture de la vanne durant une période déterminée, l'ouverture de la vanne précédant une mesure du paramètre relatif à la pression dans le segment du circuit de distribution fluidique localisé en amont de la ou des vanne(s).

Ainsi, on obtient un procédé permettant de s'assurer du bon fonctionnement de la pompe et du bloc de distribution de liquide.

En effet, en pressurisant le segment du circuit de distribution fluidique localisé entre l'orifice de sortie de la pompe et la vanne (i.e. activation de la pompe et fermeture de la ou des vannes du bloc de distribution de liquide) on peut par exemple mesurer si la pression atteinte est bien celle attendue. Si ce n'est pas le cas, alors le dispositif de nettoyage comporte un défaut potentiellement au niveau de la pompe (incapable de suffisamment pressuriser le segment en question) ou du bloc de distribution (comprenant au moins une vanne n'étant pas totalement fermée ce qui conduit à l'apparition d'une fuite).

La pression peut également être mesurée après pressurisation et ouverture d'au moins une vanne du bloc de distribution pour s'assurer d'une décroissance de la pression à un niveau attendu. Une non diminution de la pression ou une diminution trop lente permettrait de conclure à un défaut d'ouverture, partielle ou totale, d'au moins une vanne du bloc de distribution.

Suivant d'autres caractéristiques optionnelles du système de nettoyage prises seules ou en combinaison :
- La durée entre la commande d'activation de la pompe tout en maintenant la (les) vanne(s) à l'état fermée peut être supérieure ou égale à une durée permettant d'atteindre une pression maximale dans le segment du circuit de distribution fluidique localisé entre l'orifice de sortie de la pompe et la vanne en fonctionnement normal ;
- Les étapes du procédé peuvent avoir lieu par exemple au démarrage du moteur du véhicule automobile. On réalise ici une vérification le plus tôt possible pour s'assurer rapidement du bon fonctionnement du dispositif de nettoyage ou pour identifier un dysfonctionnement rapidement ;
- Les étapes du procédé peuvent avoir lieu par exemple au moins une fois lors d'un cycle de nettoyage d'au moins une surface du véhicule automobile. On profite ainsi d'une activation nécessaire du dispositif de nettoyage pour faire une ou plusieurs mesures de vérification de son bon fonctionnement ;
- La mesure du paramètre relatif à la pression dans le segment du circuit de distribution fluidique localisé en amont de la ou des vanne(s) a lieu par exemple avant la première ouverture de vanne ou entre deux ouvertures de vanne. Il s'agit d'autres possibilités de mesure de valeurs qui reflètent dans ce cas des accroissements de pression ;

Selon l'invention, la commande d'activation de la pompe pour injecter du liquide jusqu'à un orifice d'entrée de la vanne est suivie par une ouverture de la vanne durant une période déterminée, l'ouverture de la vanne précédant une mesure du paramètre relatif à la pression dans le segment du circuit de distribution fluidique localisé en amont de la ou des vanne(s). Il s'agit d'une possibilité de mesure de valeurs qui reflète dans ce cas une diminution de pression ;
- L'ouverture de la vanne a notamment lieu après que la pression dans le segment du circuit de distribution fluidique localisé en amont de la ou des vanne(s) ait atteint par exemple une valeur maximale. On limite ainsi les pertes de charge dans le circuit de distribution fluidique en créant un palier de pressurisation ;
- La valeur attendue prédéterminée correspond à une pression inférieure à la pression dans le segment du circuit de distribution fluidique localisé en amont de la ou des vanne(s) avant ouverture de la vanne. On a ici la matérialisation de la mesure d'une décroissance de pression attendue après ouverture de la vanne ;
- le capteur de pression est en particulier connecté au segment du circuit de distribution fluidique localisé en amont de la ou des vanne(s) ;
- Le dispositif de nettoyage comprend notamment une unité de contrôle électronique connectée au capteur de pression, à la pompe et à la vanne de manière à piloter l'activation de la pompe, l'ouverture et la fermeture de la vanne et la mesure d'un paramètre relatif à la pression ;
- Le dispositif de nettoyage comprend en outre par exemple au moins un capteur de débit, le procédé de vérification comprenant, au moins une fois, les étapes suivantes :
- commande d'activation de la pompe pour injecter du liquide jusqu'à la vanne durant une période de temps déterminée,
- mesure d'au moins un débit de liquide de nettoyage,
- comparaison du débit mesuré à un débit attendu prédéterminé, et
- détermination d'un état de fonctionnement du dispositif de nettoyage.

Il s'agit ici d'une mesure complémentaire permettant le contrôle du bon fonctionnement du dispositif de nettoyage ;
- Un capteur de débit peut être connecté à la pompe de manière à mesurer le débit de liquide en sortie de pompe ;
- Le bloc de distribution comprend une vanne, un capteur de débit étant par exemple connecté à la vanne de manière à mesurer le débit de liquide en sortie de vanne, ou
- le bloc de distribution comprend plusieurs vannes, au moins un capteur de débit étant par exemple connecté à toutes les vannes ou à une partie des vannes de manière à mesurer le débit de liquide en sortie de vanne.

Il s'agit ici de deux positionnements alternatifs du ou des capteurs de débit ; et
- Le procédé de vérification comprenant, au moins une fois, les étapes suivantes :
- commande d'activation de la pompe pour injecter du liquide jusqu'à la vanne durant une période de temps déterminée,
- mesure de la consommation d'énergie électrique de la pompe,
- comparaison de la consommation d'énergie électrique de la pompe à une consommation attendue de courant prédéterminée, et
- détermination d'un état de fonctionnement du dispositif de nettoyage.

Là encore, Il s'agit ici d'une mesure complémentaire permettant le contrôle du bon fonctionnement du dispositif de nettoyage.

### Brève description des figures

L'invention sera mieux comprise à la lecture de la description qui va suivre donnée uniquement à titre d'exemple et faite en se référant aux dessins annexés dans lesquels :
[Fig.1] la [Fig.1] est une représentation schématique d'un dispositif de nettoyage selon l'invention,
[Fig.2] la [Fig.2] est une représentation graphique de deux modes de fonctionnement normaux d'un dispositif de nettoyage selon l'invention,
[Fig.3] la [Fig.3] est une représentation graphique de trois modes de fonctionnement défaillants d'un dispositif de nettoyage selon l'invention, et
[Fig.4] la [Fig.4] est un organigramme des différentes étapes du procédé selon l'invention.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Par « amont » ou « aval », on situe les éléments / équipements dans le sens de transport du flux de matière à traiter. Ainsi, un premier équipement ou élément, par exemple une pompe, est situé en amont d'un deuxième équipement ou élément si la matière est d'abord traitée par le premier puis le second équipement.

### Description détaillée

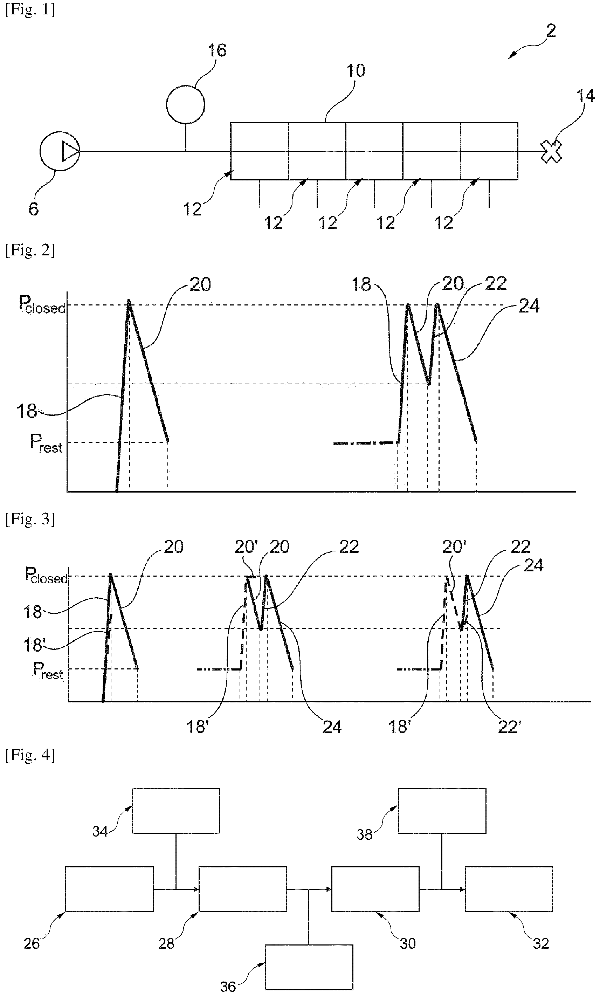

On se réfère désormais à la [Fig.1] représentant un système de nettoyage 2 embarqué sur un véhicule automobile. Ce système de nettoyage 2 a pour objectif de permettre le nettoyage de différentes surfaces du véhicule automobile comme par exemple des capteurs embarqués sur le véhicule ou encore le pare-brise ou la lunette arrière.

Le dispositif de nettoyage comprend un réservoir de liquide (non représenté sur les figures) de nettoyage sur lequel est montée une pompe 6. La pompe 6 est montée dans un renfoncement du réservoir destiné à accueillir la pompe 6, le réservoir comprenant un orifice au travers duquel un tube d'admission de la pompe 6 est monté, avec un joint à l'interface entre le réservoir et la pompe 6 au niveau de l'orifice pour assurer l'étanchéité de l'ensemble. La pompe 6 est de manière classique une pompe standard comprenant par exemple un corps principal de forme tubulaire. Ce corps principal peut être composé d'une première partie de pompage et d'une seconde partie d'entraînement comprenant un moteur électrique. La première partie de pompage comprend un tube d'admission de liquide et un tube de refoulement de liquide afin de pouvoir recevoir du liquide de nettoyage du réservoir et de le refouler à une pression supérieure à la pression en entrée de pompe 6. Le tube d'admission de liquide peut être placé à une extrémité libre de la première partie de pompage et être coaxial avec le corps principal de la pompe 6 en partageant avec ce dernier le même axe de révolution. La seconde partie de refoulement peut s'étendre à partir de la première partie de pompage dans une direction perpendiculaire à l'axe de révolution du corps principal.

Par contre, il se peut que la pompe 6 est montée indépendamment du réservoir, par exemple sur la structure du véhicule, entre le réservoir et les électrovannes, comme dans une mode de réalisation variante non-illustrée. Dans une telle configuration, un premier tuyau est fourni entre le réservoir et la pompe, et un deuxième tuyau est fourni entre la pompe et les électrovannes. De telles configurations sont particulièrement courantes pour des camions et d'autres véhicules lourdes.

La seconde partie d'entraînement peut être située au-dessus de la première partie de pompage et comprendre un moteur électrique et, à son extrémité libre, un connecteur permettant de connecter la pompe 6 à une source d'alimentation électrique.

Une ou plusieurs buses de nettoyage (non représentées sur les figures) sont situées à l'autre extrémité du dispositif de nettoyage et destinées à être placée devant une surface du véhicule automobile à nettoyer afin d'y projeter du liquide de nettoyage pressurisé.

Le dispositif de nettoyage comprend en outre des tuyaux (ou canalisations) reliant les différents organes (pompe 6, buse de nettoyage, etc.) entre eux pour former un circuit de distribution fluidique 8.

Le dispositif de nettoyage 2 comprend en outre un bloc de distribution de liquide de nettoyage 10 comprenant au moins une vanne 12 (cinq dans le cas présent). La pompe 6 est configurée pour pomper le liquide de lavage du réservoir et l'envoyer vers le bloc de distribution 10 et les buses de nettoyage.

Les vannes 12 du bloc de distribution 10 sont configurées pour être reliées fluidiquement respectivement aux buses (une vanne 12 reliée à une buse par exemple, le nombre de vannes et de buses pouvant varier). Les vannes 12 sont configurées pour transmettre sélectivement le liquide de lavage pompé vers les buses de nettoyage associées. Les vannes 12 sont par exemple des électrovannes utilisées de manière classique dans ce type dispositif de nettoyage. Les vannes 12 peuvent être disposées en parallèle, c'est-à-dire qu'elles sont toutes reliées à un canal fluidique du bloc de distribution 8. Ce canal fluidique est relié à une entrée 10a du bloc de distribution 10 connectée à la pompe 6. Une sortie 10b du bloc de distribution 10 est quant à elle obturée par un capuchon 14.

Ainsi, en fonctionnement, l'activation de la pompe 6 permet de transmettre le liquide de nettoyage du réservoir vers le bloc de distribution 10 et vers les buses de nettoyage dont la vanne 12 associée est ouverte.

Le bloc de distribution 10 est un bloc modulaire de sorte que le nombre de vannes 12 peut être facilement modifié pour s'adapter au nombre de buses de nettoyage ou à une configuration particulière du dispositif de nettoyage, par exemple en fonction du modèle du véhicule automobile si le dispositif de nettoyage 2 est disposé sur un véhicule automobile. Différents blocs de distribution 10 peuvent également être combinés.

Le dispositif de nettoyage 2 comprend enfin au moins un capteur de pression 16 permettant de mesurer un paramètre relatif à la pression dans un segment entre un orifice de sortie de la pompe 6 et un orifice d'entrée de la ou des vannes 12 (correspondant à l'entrée 10a du bloc de distribution). Il s'agit donc du segment, comme pouvant être énoncé ailleurs dans le présent titre, situé en amont de la ou des vannes. Le capteur de pression 16 peut être connecté au segment du circuit de distribution fluidique localisé entre l'orifice de sortie de la pompe 6 et la vanne ou les vannes 12.

Concernant le procédé de vérification, la première étape de ce dernier correspond à une commande d'activation de la pompe pour injecter du liquide de nettoyage jusqu'à la vanne durant une période de temps déterminée, la commande d'activation de la pompe pour injecter du liquide jusqu'à un orifice d'entrée de la vanne étant couplée au maintien d'un état fermé de la vanne.

Cette étape constitue une pressurisation du système et permet de déterminer par la suite l'atteinte d'une valeur plafond ou encore la variation de cette valeur.

La seconde étape consiste en au moins une mesure d'un paramètre relatif à la pression du liquide de nettoyage dans un segment du circuit de distribution fluidique localisé entre l'orifice de sortie de la pompe et la vanne par au moins un capteur de pression.

Cette étape permet donc d'obtenir au moins une fois une valeur d'un paramètre relatif à la pression après l'étape de pressurisation. Comme nous le verrons par la suite, cela peut faire suite directement à la pressurisation du segment du circuit de distribution fluidique 8 situé entre la pompe 6 et le bloc de distribution 10 et/ou après une ouverture et/ou une fermeture d'au moins une vanne 12 (plusieurs possibilités combinables entre elles seront décrites par la suite).

Concernant le paramètre mesuré, ce dernier peut être la pression ou tout autre paramètre représentatif de la pression.

La troisième étape du procédé de vérification consiste en une comparaison du paramètre relatif à la pression mesurée à une valeur attendue prédéterminée.

En effet, une ou des valeurs prédéterminées sont enregistrées, par exemple au niveau d'une unité de contrôle du procédé de vérification, afin de pouvoir vérifier si la ou les valeurs mesurées sont conformes aux valeurs attendues. Par exemple, si l'on souhaite vérifier que la pressurisation énoncée plus haut a bien été effectuée, il est possible de pressuriser le segment du circuit de distribution fluidique 8 situé entre la pompe 6 et le bloc de distribution 10 (en faisant fonctionner la pompe 6 pendant une durée suffisante pour atteindre théoriquement une pression maximale), de mesurer la pression atteinte et de la comparer à une valeur attendue prédéterminée étant la pression maximale attendue dans le segment.

La quatrième étape consiste en une détermination d'un état de fonctionnement du dispositif de nettoyage. En effet, une différence de valeur pourrait permettre de conduire à la conclusion qu'une fuite dans le système ou encore qu'un dysfonctionnement de la pompe empêche le bon fonctionnement du dispositif de nettoyage, ce qui peut par exemple permettre son basculement en mode dégradé et un avertissement à l'utilisateur du véhicule.

La [Fig.2] illustre deux modes de fonctionnement normal du dispositif de nettoyage 2. Il s'agit ici de mesure de pression (axe des ordonnées) en fonction du temps (axe des abscisses) avec des temps d'activation ou non de la pompe 6 et des temps de fermeture et d'ouverture de la ou des vannes 12.

On va décrire à partir de maintenant des modes de réalisation de l'invention dans lesquels le paramètre mesuré est une pression.

La première portion 18 correspond, sur les deux courbes, à une activation de la pompe 6, par exemple au démarrage du véhicule ou lorsque qu'un cycle de nettoyage est nécessaire avec la ou les vannes 12 fermées pour pressuriser le segment situé entre la pompe 6 et le bloc de distribution 10.

Cela permet en théorie d'atteindre une pression, par exemple nommée « P*_{closed}* », qui peut être la pression maximale du segment ou tout autre pression correspondant à un temps d'activation d'une pompe ayant un débit donné.

Les deux courbes comprennent par la suite une portion 20 correspondant à un arrêt de la pompe ou à une ouverture d'au moins une vanne 12 pour un nettoyage pendant une durée déterminée, ce qui conduit à une chute de pression dans le segment situé entre la pompe 6 et le bloc de distribution 10. On notera ici qu'il est possible qu'une pression résiduelle, par exemple nommée « *Pᵣₑₛ* », subsiste dans le segment situé entre la pompe 6 et le bloc de distribution 10.

La courbe de droite comprend deux autres portions 22 et 24 correspondants respectivement à une fermeture de la ou des vannes 12 ouvertes avec une pompe 6 activée et donc à une remontée de la pression dans le segment situé entre la pompe 6 et le bloc de distribution 10 (par exemple jusqu'à atteindre de nouveau la pression P_{closed}, puis par exemple à un arrêt de la pompe ce qui conduit, comme pour la portion 20, à une chute de pression dans le segment situé entre la pompe 6 et le bloc de distribution 10. Là encore, une pression résiduelle peut subsister dans le segment situé entre la pompe 6 et le bloc de distribution 10.

La [Fig.3] illustre quant à elle trois modes de fonctionnement défaillants du dispositif de nettoyage 2. Comme pour la [Fig.2], il s'agit de mesure de pression (axe des ordonnées) en fonction du temps (axe des abscisses) avec des temps d'activation ou non de la pompe 6 et des temps de fermeture et d'ouverture de la ou des vannes 12.

Sur la courbe de gauche, une portion 18' illustre une activation de la pompe 6, avec la ou les vannes 12 fermées, pendant une durée permettant théoriquement d'atteindre une pression attendue, par exemple P_{closed}. Cependant, la pression atteinte et illustrée par la portion 18' est inférieure à celle attendue (il pourrait potentiellement n'y avoir aucune augmentation de pression. Les étapes du procédé de vérification selon l'invention (pressurisation, mesure d'un paramètre qui est ici la pression, comparaison a une valeur attendue prédéterminée qui est ici P_{closed}, et détermination d'un état de fonctionnement du dispositif de nettoyage suite à cette comparaison) permettent d'identifier une différence entre la valeur mesurée et la valeur attendue prédéterminée et ainsi conclure à un dysfonctionnement du dispositif de nettoyage, ce qui peut par exemple permettre son basculement en mode dégradé et un avertissement à l'utilisateur du véhicule.

Concernant le cas de défaillance constaté ici, il peut s'agir une fuite, par exemple due à une mauvaise fermeture ou à une absence de fermeture d'au moins une vanne 12, ou à un défaut de la pompe 6 ne permettant pas une bonne pressurisation du segment situé entre la pompe 6 et le bloc de distribution 10.

La courbe du milieu sur la [Fig.3] illustre un second cas de défaillance.

Dans ce cas, la portion 18' est confondue avec la portion 18 car la pressurisation a été satisfaisante. Cependant, la portion 20' peut montrer, comme sur la courbe, une absence de décroissance de la pression ou une diminution de la pression plus lente que ce qui est attendue. Dès lors, et après ouverture d'au moins une vanne 12 pendant une durée déterminée, la pression mesurée est supérieure à la pression attendue prédéterminée et une avarie est constatée après comparaison des deux valeurs. Dans le cas présent, il peut s'agir d'un défaut d'ouverture partiel ou totale de la ou des vannes 12 devant être ouvertes.

La courbe de droite illustre quant à elle un troisième cas de défaillance.

Les portions 18' et 20' chevauchent respectivement les portions 18 et 20, ce qui atteste d'un fonctionnement normal jusque-là.

Cependant, au moment de la re-fermeture de la ou des vannes 12 ayant conduit à une chute de pression (portion 20) avec une pompe 6 toujours active pendant une durée déterminée, on note un accroissement de pression plus lent que celui attendu comme le montre la portion 22' en comparaison de la portion 22 (il pourrait même n'y avoir aucun accroissement de pression) pour une même période de temps. Une avarie est donc constatée, qui peut là aussi correspondre à une mauvaise fermeture ou à une absence de fermeture d'au moins une vanne 12, ou à un défaut de la pompe 6 ne permettant pas une bonne pressurisation du segment situé entre la pompe 6 et le bloc de distribution 10.

La [Fig.4] permet de visualiser les différentes étapes illustrées par les portions de courbes 18, 20, 22 et 24.

La première étape 26 correspond à l'activation de la pompe 6 avec la ou les vanne(s) 12 fermées et donc à l'augmentation de la pression correspondant à la portion 18. Elle est suivie d'une étape 28 correspondant à une ouverture d'au moins une vanne 12 et donc à une diminution de la pression comme illustré par la portion 20. L'étape 30 correspond à un retour de la ou des vannes(s) ouvertes à l'état fermé avec une pompe 6 toujours active, et donc à la portion 22 illustrant une nouvelle augmentation de pression. Enfin, l'étape 32 peut correspondre à une mise hors tension de la pompe 6 et donc à une chute de pression illustrée par la portion 24.

Les étapes 34, 36 et 38 correspondent aux trois mesures de pression décrites plus haut, à savoir :
- entre les étapes 26 et 28 pour vérifier l'atteinte d'une pression prédéterminée, par exemple la pression maximale,
- entre les étapes 28 et 30 pour vérifier une diminution de pression suite à l'ouverture d'au moins une vanne 12, et
- entre les étapes 30 et 32 pour vérifier une nouvelle augmentation de pression après fermeture de la ou des vannes(s) 12 ouvertes, la pompe 6 étant toujours active.

Comme expliqué plus haut, et selon un mode de réalisation de l'invention, la commande d'activation de la pompe est d'une durée permettant d'atteindre une pression maximale dans le segment du circuit de distribution fluidique localisé entre l'orifice de sortie de la pompe et la vanne, la valeur attendue prédéterminée correspondant à la pression maximale. Il s'agit ici d'une vérification correspondant aux portions 18 et 22 des courbes sur les figures 2 et 3. Comme expliqué plus haut, la pompe 6 est activée pendant une durée déterminée devant permettre d'atteindre une pression ayant une valeur attendue prédéterminée, ici la pression maximale. La mesure de la pression puis sa comparaison à la valeur attendue permet de constater, comme expliqué ci-dessus, un dysfonctionnement du dispositif de nettoyage.

Selon une variante, les étapes du procédé ont lieu au démarrage du moteur du véhicule automobile. Il s'agira de manière préférentielle du mode de vérification correspondant à la pressurisation du segment situé entre la pompe 6 et le bloc de distribution 10. Bien évidemment, le procédé de vérification lors de la pressurisation peut être réalisé lors d'un cycle de nettoyage (i.e. pressurisation du segment situé entre la pompe 6 et le bloc de distribution 10 avant ouverture d'au moins une vanne 12). Il est également possible, lors du démarrage du véhicule, d'effectuer la pressurisation susmentionnée puis de mesurer, comme expliquer plus haut, une décroissance de la pression.

Les étapes du procédé peuvent avoir lieu au moins une fois lors d'un cycle de nettoyage d'au moins une surface du véhicule automobile pour mesurer au moins une fois l'une des pressions décrites ci-dessus et illustrées aux figures 2 et 3, à savoir une mesure d'un paramètre relatif à la pression dans le segment du circuit de distribution fluidique localisé entre l'orifice de sortie de la pompe et la vanne et comparaison à une valeur attendue prédéterminée :
- après pressurisation et avant une première ouverture de vanne 12,
- après ouverture d'au moins une des vannes 12 pendant une période déterminée afin de mesurer la décroissance du paramètre relatif à la pression et comparaison à une valeur attendue prédéterminée (dans ce cas, la pression mesurée dans le segment situé entre la pompe 6 et le bloc de distribution 10 doit être inférieure à la pression avant ouverture de la ou des vannes 12),
- entre deux ouvertures de vanne(s) 12 (re-pressurisation illustrée par la portion 22, ou encore chute de pression entre deux ouvertures de vanne(s) 12),
- après arrêt de la pompe 6.

L'ouverture de la vanne a lieu de préférence après que la pression dans le segment du circuit de distribution fluidique localisé entre l'orifice de sortie de la pompe et la vanne ait atteint une valeur maximale. Cela permet de créer un palier permettant de s'assurer que la pression traversant la ou les vannes 12 ouvertes sera la pression maximale. Il est dès lors possible de limiter les pertes de charge le long du circuit de distribution fluidique 8.

Une unité de contrôle électronique peut être connectée au capteur de pression, à la pompe et à la vanne de manière à piloter l'activation de la pompe, l'ouverture et la fermeture de la vanne et la mesure d'un paramètre relatif à la pression. Cette unité de contrôle permet donc de contrôler les différents éléments permettant un cycle de nettoyage mais également la réalisation du procédé de vérification de fonctionnement du dispositif de nettoyage.

En complément d'une mesure d'un paramètre relatif à la pression, il est possible de surveiller le débit de liquide de nettoyage dans le circuit de distribution fluidique 8.

Pour cela, le procédé de vérification peut comprendre au moins une fois la série d'étapes suivante :
- commande d'activation de la pompe pour injecter du liquide jusqu'à la vanne durant une période de temps déterminée,
- mesure d'au moins un débit de liquide de nettoyage,
- comparaison du débit mesuré à un débit attendu prédéterminé, et
- détermination d'un état de fonctionnement du dispositif de nettoyage.

Dans un tel type de vérification, l'intérêt consiste à vérifier que le débit de liquide, dans des conditions déterminées et à un endroit déterminé, est bien celui attendu (le principe de fonctionnement en quatre étapes est le même que celui décrit plus haut).

Par exemple, un capteur de débit peut être connecté à la pompe de manière à mesurer le débit de liquide en sortie de pompe.

Alternativement, au moins un capteur de débit peut être présent au niveau du bloc de distribution 10 selon une des possibilités suivantes :
- le bloc de distribution comprend une vanne, un capteur de débit étant connecté à la vanne de manière à mesurer le débit de liquide en sortie de vanne, ou
- le bloc de distribution comprend plusieurs vannes, au moins un capteur de débit étant connecté à toutes les vannes ou à une partie des vannes de manière à mesurer le débit de liquide en sortie de vanne.

En complément de la mesure d'un paramètre relatif à la pression et alternativement ou en complément d'une mesure de débit, il est possible de mesurer la consommation d'énergie électrique de la pompe 6 activée.

En effet, le courant consommé par la pompe 6 dans des conditions données (par exemple de température) en fonctionnement est connu. Des valeurs de consommation électrique peuvent dès lors être déterminées et enregistrées. Il pourrait par exemple s'agir de la consommation électrique de la pompe 6 au moment de la pressurisation du segment du circuit de distribution fluidique 8 compris entre la pompe 6 et le bloc de distribution 10.

Le procédé peut comprendre dans ce cas, au moins une fois, les étapes suivantes :
- commande d'activation de la pompe pour injecter du liquide jusqu'à la vanne durant une période de temps déterminée,
- mesure de la consommation d'énergie électrique de la pompe,
- comparaison de la consommation d'énergie électrique de la pompe à une consommation attendue de courant prédéterminée, et
- détermination d'un état de fonctionnement du dispositif de nettoyage.

Dans ce cas de figure, et comme dans le cas de la mesure du débit, on retrouve le même type de moyens de mesure (capteur permettant de mesurer la consommation électrique de la pompe) et de contrôle (unité de contrôle pouvant recevoir les données mesurer, les comparer avec les valeurs attendues et détermination d'un état de fonctionnement du dispositif de nettoyage) que ceux permettant une vérification via un paramètre relatif à la pression.

L'invention n'est pas limitée aux modes de réalisation présentés et d'autres modes de réalisation apparaîtront clairement à l'homme du métier. Il est notamment possible que l'architecture (i.e. l'agencement des différents moyens présents) du dispositif de nettoyage 2 soit différente de celle décrite plus haut. Il est également possible d'effectuer des mesures à des moments différents de ceux illustrés sur les figures, si tant est qu'il est possible de comparer les valeurs mesurées à des valeurs attendues prédéterminées.

### Liste de références

2 : dispositif de nettoyage
6 : pompe
8 : circuit de distribution fluidique
10 : bloc de distribution
12 : vannes
14 : capuchon
16 : capteur de pression
18, 20 ,22, 24 : portions de courbes de pression relatives à un fonctionnement normal
18', 20', 22' : portions de courbes de pression relatives à un dysfonctionnement
26, 28, 30, 32, 34, 36, 38 : étapes du procédé de vérification

## Revendications

1. Procédé de vérification du fonctionnement d'un dispositif de nettoyage (2) de surface de véhicule destiné à être monté sur un véhicule automobile, le dispositif de nettoyage comprenant un réservoir de liquide de nettoyage, au moins une buse pour projeter le liquide de nettoyage sur une surface à nettoyer, un circuit de distribution fluidique (8) agencé pour acheminer du liquide de nettoyage du réservoir vers la buse de nettoyage et une pompe (6) agencée pour injecter le liquide de nettoyage contenu dans le réservoir dans le circuit de distribution fluidique (8), le circuit de distribution fluidique (8) comprenant un bloc de distribution (10) de liquide de nettoyage comprenant au moins une vanne (12), le bloc étant disposé entre un orifice de sortie de la pompe (6) et la buse, le procédé comprenant, au moins une fois, les étapes suivantes :
- commande d'activation de la pompe (6) pour injecter du liquide de nettoyage jusqu'à la vanne (12) durant une période de temps déterminée, la commande d'activation de la pompe (6) pour injecter du liquide jusqu'à un orifice d'entrée de la vanne (12) étant couplée au maintien d'un état fermé de la ou des vanne(s) (12),
- au moins une mesure d'un paramètre relatif à la pression du liquide de nettoyage dans un segment du circuit de distribution fluidique (8) localisé en amont de la ou des vanne(s) (12) par au moins un capteur de pression (16),
- comparaison du paramètre relatif à la pression mesuré à une valeur attendue prédéterminée,
- détermination d'un état de fonctionnement du dispositif de nettoyage (2) en fonction du résultat de comparaison entre le paramètre relatif à la pression mesuré à la valeur attendue prédéterminée, et
- génération d'un signal d'alerte en cas de dysfonctionnement du dispositif de nettoyage (2),
**caractérisé en ce que_**la commande d'activation de la pompe (6) pour injecter du liquide jusqu'à un orifice d'entrée de la vanne (12) est suivie par une ouverture de la vanne (12) durant une période déterminée, l'ouverture de la vanne (12) précédant une mesure du paramètre relatif à la pression dans le segment du circuit de distribution fluidique (8) localisé en amont de la ou des vanne(s) (12).

2. Procédé de vérification selon la revendication 1, dans lequel la durée entre la commande d'activation de la pompe (6) tout en maintenant la (les) vanne(s) à l'état fermée est supérieur ou égale à une durée permettant d'atteindre une pression maximale dans le segment du circuit de distribution fluidique (8) localisé entre l'orifice de sortie de la pompe (6) et la vanne (12) en fonctionnement normal.

3. Procédé de vérification selon l'une quelconque des revendications précédentes, les étapes du procédé ayant lieu au démarrage du moteur du véhicule automobile.

4. Procédé de vérification selon l'une quelconque des revendications précédentes, les étapes du procédé ayant lieu au moins une fois lors d'un cycle de nettoyage d'au moins une surface du véhicule automobile.

5. Procédé de vérification selon la revendication 4, dans lequel la mesure du paramètre relatif à la pression dans le segment du circuit de distribution fluidique (8) localisé en amont de la ou des vanne(s) (12) a lieu en outre avant la première ouverture de vanne (12) ou entre deux ouvertures de vanne (12).

6. Procédé de vérification selon l'une quelconque des revendications précédentes, dans lequel le dispositif de nettoyage (2) comprend en outre au moins un capteur de débit, le procédé de vérification comprenant, au moins une fois, les étapes suivantes :
- commande d'activation de la pompe (6) pour injecter du liquide jusqu'à la vanne (12) durant une période de temps déterminée,
- mesure d'au moins un débit de liquide de nettoyage,
- comparaison du débit mesuré à un débit attendu prédéterminé, et
- détermination d'un état de fonctionnement du dispositif de nettoyage (2).

7. Procédé de vérification selon la revendication 6, dans lequel un capteur de débit est connecté à la pompe (6) de manière à mesurer le débit de liquide en sortie de pompe (6).

8. Procédé de vérification selon l'une quelconque des revendications 6 et 7, dans lequel :
- le bloc de distribution (10) comprend une vanne (12), un capteur de débit étant connecté à la vanne (12) de manière à mesurer le débit de liquide en sortie de vanne (12), ou
- le bloc de distribution (10) comprend plusieurs vannes (12), au moins un capteur de débit étant connecté à toutes les vannes (12) ou à une partie des vannes (12) de manière à mesurer le débit de liquide en sortie de vanne (12).

9. Procédé de vérification selon l'une quelconque des revendications précédentes, dans lequel le dispositif de nettoyage (2) comprend en outre un dispositif de mesure d'une consommation électrique de la pompe (6), le procédé de vérification comprenant, au moins une fois, les étapes suivantes :
- commande d'activation de la pompe (6) pour injecter du liquide jusqu'à la vanne (12) durant une période de temps déterminée,
- mesure de la consommation d'énergie électrique de la pompe (6),
- comparaison de la consommation d'énergie électrique de la pompe (6) à une consommation attendue de courant prédéterminée, et
- détermination d'un état de fonctionnement du dispositif de nettoyage (2).

## Patentansprüche

1. Ein Verfahren zur Überprüfung des Betriebs einer Fahrzeugoberflächen-Reinigungsvorrichtung (2), die dazu bestimmt ist, an einem Kraftfahrzeug montiert zu werden, wobei die Reinigungsvorrichtung ein Reservoir mit Reinigungsflüssigkeit, mindestens eine Düse zum Sprühen der Reinigungsflüssigkeit auf eine zu reinigende Oberfläche, einen Fluidverteilungskreislauf (8), der dazu ausgelegt ist, die Reinigungsflüssigkeit vom Reservoir zur Reinigungsdüse zu befördern, und eine Pumpe (6), die dazu ausgelegt ist, die im Reservoir enthaltene Reinigungsflüssigkeit in den Fluidverteilungskreislauf (8) zu injizieren, umfasst, wobei der Fluidverteilungskreislauf (8) einen Reinigungsfluid-Verteilerblock (10) umfasst, der mindestens ein Ventil (12) umfasst, wobei der Block zwischen einer Auslassöffnung der Pumpe (6) und der Düse positioniert ist, wobei das Verfahren mindestens einmal die folgenden Schritte umfasst:
- Befehl zur Aktivierung der Pumpe (6) zum Injizieren von Reinigungsfluid bis zum Ventil (12) während eines bestimmten Zeitraums, wobei der Befehl zur Aktivierung der Pumpe (6) zum Injizieren von Flüssigkeit bis zu einer Einlassöffnung des Ventils (12) mit dem Geschlossensein des Ventils oder der Ventile (12) gekoppelt ist,
- mindestens eine Messung eines Parameters, der sich auf den Druck der Reinigungsflüssigkeit in einem Segment des Fluidverteilungskreislaufs (8) bezieht, das stromaufwärts des Ventils oder der Ventile (12) angeordnet ist, unter Verwendung mindestens eines Drucksensors (16),
- Vergleich des gemessenen Parameters, der sich auf den Druck bezieht, mit einem vorbestimmten erwarteten Wert,
- Bestimmung eines Betriebszustands der Reinigungsvorrichtung (2) auf der Grundlage des Ergebnisses des Vergleichs zwischen dem gemessenen Parameters, der sich auf den Druck bezieht, und dem vorbestimmten erwarteten Wert, und
- Erzeugung eines Warnsignals für den Fall, dass die Reinigungsvorrichtung (2) eine Fehlfunktion aufweist,
****dadurch gekennzeichnet**, dass** der Befehl zur Aktivierung der Pumpe (6) zum Injizieren von Flüssigkeit bis zu einer Einlassöffnung des Ventils (12) durch ein Öffnen des Ventils (12) für die Dauer eines bestimmten Zeitraums gefolgt wird, wobei das Öffnen des Ventils (12) einer Messung des Parameters, der sich auf den Druck im Segment des Fluidverteilungskreislaufs (8) bezieht, das stromaufwärts des Ventils oder der Ventile (12) angeordnet ist, vorausgeht.

2. Das Verifikationsverfahren nach Anspruch 1, wobei die Dauer zwischen dem Befehl zur Aktivierung der Pumpe (6) bei gleichzeitigem Geschlossensein des Ventils oder der Ventile größer oder gleich einer Dauer ist, die es ermöglicht, einen maximalen Druck in dem Segment des Fluidverteilungskreislaufs (8) zu erreichen, das sich zwischen der Auslassöffnung der Pumpe (6) und dem Ventil (12) im Normalbetrieb befindet.

3. Das Verifikationsverfahren nach einem der vorhergehenden Ansprüche, wobei die Verfahrensschritte beim Starten des Motors des Kraftfahrzeugs stattfinden.

4. Das Verifikationsverfahren nach einem der vorhergehenden Ansprüche, wobei die Verfahrensschritte mindestens einmal während eines Reinigungszyklus von mindestens einer Oberfläche des Kraftfahrzeugs stattfinden.

5. Das Verifikationsverfahren nach Anspruch 4, wobei die Messung des Parameters, der sich auf den Druck in dem Segment des Fluidverteilungskreislaufs (8) bezieht, das stromaufwärts des Ventils oder der Ventile (12) angeordnet ist, ferner vor der ersten Öffnung eines Ventils (12) oder zwischen zwei Öffnungen eines Ventils (12) stattfindet.

6. Das Verifikationsverfahren nach einem der vorhergehenden Ansprüche, wobei die Reinigungsvorrichtung (2) ferner mindestens einen Durchflusssensor umfasst, wobei das Verifikationsverfahren mindestens einmal die folgenden Schritte umfasst:
- Befehl zur Aktivierung der Pumpe (6) zum Injizieren von Flüssigkeit bis zum Ventil (12) während eines bestimmten Zeitraums,
- Messung mindestens einer Durchflussrate der Reinigungsflüssigkeit,
- Vergleich der gemessenen Durchflussrate mit einer vorbestimmten erwarteten Durchflussrate, und
- Bestimmung eines Betriebszustands der Reinigungsvorrichtung (2).

7. Das Verifikationsverfahren nach Anspruch 6, wobei ein Durchflusssensor mit der Pumpe (6) verbunden ist, um die Durchflussrate der die Pumpe (6) verlassenden Flüssigkeit zu messen.

8. Das Verifikationsverfahren nach einem der Ansprüche 6 und 7, wobei:
- der Verteilerblock (10) ein Ventil (12) umfasst, wobei ein Durchflusssensor mit dem Ventil (12) verbunden ist, um die Durchflussrate der das Ventil (12) verlassenden Flüssigkeit zu messen, oder
- der Verteilerblock (10) mehrere Ventile (12) umfasst, wobei mindestens ein Durchflusssensor mit allen Ventilen (12) oder mit einigen der Ventile (12) verbunden ist, um die Durchflussrate der die Ventile (12) verlassenden Flüssigkeit zu messen.

9. Das Verifikationsverfahren nach einem der vorhergehenden Ansprüche, wobei die Reinigungsvorrichtung (2) ferner eine Messvorrichtung umfasst, die den elektrischen Stromverbrauch der Pumpe (6) misst, wobei das Verifikationsverfahren mindestens einmal die folgenden Schritte umfasst:
- Befehl zur Aktivierung der Pumpe (6) zum Injizieren von Flüssigkeit bis zum Ventil (12) während eines bestimmten Zeitraums,
- Messung des elektrischen Stromverbrauchs der Pumpe (6),
- Vergleich des elektrischen Stromverbrauchs der Pumpe (6) mit einem vorbestimmten erwarteten Stromverbrauch, und
- Bestimmung eines Betriebszustands der Reinigungsvorrichtung (2).

## Claims

1. A method for verifying the operation of a vehicle-surface cleaning device (2) intended to be mounted on a motor vehicle, the cleaning device comprising a reservoir with cleaning liquid, at least one nozzle for spraying the cleaning liquid onto a surface that is to be cleaned, a fluid distribution circuit (8) designed to convey the cleaning liquid from the reservoir to the cleaning nozzle and a pump (6) designed to inject the cleaning liquid contained in the reservoir into the fluid distribution circuit (8), the fluid distribution circuit (8) comprising a cleaning fluid distribution block (10) comprising at least one valve (12) the block being positioned between an outlet orifice of the pump (6) and the nozzle, the method comprising, at least once, the following steps:
- command to activate the pump (6) to inject cleaning fluid as far as the valve (12) during a determined time period, the command to activate the pump (6) to inject liquid as far as an inlet orifice of the valve (12) being coupled with the keeping of the valve or valves (12) in the closed state,
- at least one measurement of a parameter relating to the pressure of the cleaning liquid in a segment of the fluid distribution circuit (8) located upstream of the valve or valves (12) using at least one pressure sensor (16),
- comparison of the measured parameter relating to the pressure against a predetermined expected value,
- determination of an operating status of the cleaning device (2) on the basis of the result of the comparison between the measured parameter relating to the pressure and the predetermined expected value, and
- generation of a warning signal in the event that the cleaning device (2) is malfunctioning
**characterized in that** the command to activate the pump (6) to inject liquid as far as an inlet orifice of the valve (12) is followed by an opening of the valve (12) for the duration of a determined period, the opening of the valve (12) preceding a measurement of the parameter relating to the pressure in the segment of the fluid distribution circuit (8) that is located upstream of the valve or valves (12)

2. The verification method as claimed in claim 1, wherein the duration between the command to activate the pump (6) while keeping the valve or valves in the closed state is greater than or equal to a duration enabling a maximum pressure to be attained in the segment of the fluid distribution circuit (8) that is located between the outlet orifice of the pump (6) and the valve (12) in normal operation.

3. The verification method as claimed in either one of the preceding claims, the method steps taking place upon the starting of the engine of the motor vehicle.

4. The verification method as claimed in any one of the preceding claims, the method steps taking place at least once during a cycle of cleaning at least one surface of the motor vehicle.

5. The verification method as claimed in claim 4, wherein the measuring of the parameter relating to the pressure in the segment of the fluid distribution circuit (8) that is located upstream of the valve or valves (12) further takes place prior to the first opening of a valve (12) or between two openings of a valve (12).

6. The verification method as claimed in any one of the preceding claims, wherein the cleaning device (2) further comprises at least a flow sensor, the verification method comprising, at least once, the following steps:
- command to activate the pump (6) to inject liquid as far as the valve (12) during a determined time period,
- measurement of at least one flow rate of cleaning liquid,
- comparison of the measured flow rate against a predetermined expected flow rate, and
- determination of an operating status of the cleaning device (2).

7. The verification method as claimed in claim 6, wherein a flow sensor is connected to the pump (6) so as to measure the flow rate of liquid leaving the pump (6).

8. The verification method as claimed in either one of claims 6 and 7, wherein:
- the distribution block (10) comprises a valve (12), a flow sensor being connected to the valve (12) so as to measure the flow rate of liquid leaving the valve (12), or
- the distribution block (10) comprises several valves (12), at least one flow sensor being connected to all the valves (12) or to some of the valves (12) so as to measure the flow rate of liquid leaving the valve (12).

9. The verification method as claimed in any one of the preceding claims, wherein the cleaning device (2) further comprises a measurement device measuring the electrical power consumption of the pump (6), the verification method comprising, at least once, the following steps:
- command to activate the pump (6) to inject liquid as far as the valve (12) during a determined time period,
- measurement of the electrical power consumption of the pump (6),
- comparison of the electrical power consumption of the pump (6) against a predetermined expected draw of current, and
- determination of an operating status of the cleaning device (2).
